# EUROPÄISCHE PATENTSCHRIFT

(11) **EP 1 983 241 B1**
(45) Veröffentlichungstag und Bekanntmachung des Hinweises auf die Patenterteilung: **21.05.2014**
(21) Anmeldenummer: 08103112.2
(22) Anmeldetag: 28.03.2008
(51) Int. Cl.: F16K 37/00

(54) **Verfahren zur Ermittlung funktionsrelevanter Daten eines Aggregates sowie ein einen Stellantrieb aufweisendes Aggregat**
Method for determining function-relevant files of a device and device with actuator
Procédé de détermination de données relatives à la fonction d'un agrégat et agrégat comprenant un mécanisme de commande

(30) Priorität: 20.04.2007 DE 102007018714
(43) Veröffentlichungstag der Anmeldung: 22.10.2008
(73) Patentinhaber: ARI-Armaturen Albert Richter GmbH & Co. KG, 33758 Schloss Holte-Stukenbrock (DE)
(72) Erfinder: Fuchs, Michael, 32602, Vlotho (DE); Hachmann, Frank, 33758, Schloß Holte-Stukenbrock (DE)
(74) Vertreter: Dantz, Jan Henning

(56) Entgegenhaltungen:
- DE-A1- 19 853 000
- US-A- 4 977 778

## Beschreibung

Die Erfindung betrifft ein Verfahren zur Ermittlung funktionsrelevanter Daten eines Aggregates gemäß dem Oberbegriff des Anspruchs 1 sowie ein einen Stellantrieb aufweisendes Aggregat, nach dem Oberbegriff des Anspruchs 10.

Aggregate mit Stellantrieben kommen in unterschiedlichster Form und Funktion zum Einsatz. Beispielhaft seien hier Ventile genannt, die in Rohrleitungssysteme integriert sind und die über die darin angeschlossenen Stellantriebe regelbar sind.

Zur Erfassung funktions- bzw. betriebsrelevanter Daten, wie beispielsweise Betriebszustände, Ansteuerung, Spannungsversorgung, Daten von Sensoriken, zeitliche Abläufe, Seriennummern, Stör- und Warnmeldungen, die zur Diagnose und zur vorbeugenden Wartung genutzt werden, sind Datenspeicher integriert, die durch ein externes Gerät, vorzugsweise einen tragbaren Rechner, abgefragt und ausgewertet werden.

Die Datenübertragung erfolgt drahtlos über eine Infrarot- oder Funkverbindung, wie z.B. Bluetooth oder dergleichen. Dabei kommt diese drahtlose Datenübertragung insbesondere dort zur Anwendung, wo die Aggregate an schwer zugänglichen Stellen installiert sind, beispielsweise unter Hallendecken oder hinter heißen Rohrleitungen.

Nachteilig bei den bekannten Verfahren ist, dass bei einer Infrarot-Datenübertragung mehrere Aggregate, die sich in der Nähe zu baugleichen Aggregaten befinden, angesprochen werden, so dass eine eindeutige Zuordnung der Daten zu dem abzufragenden Aggregat nicht gewährleistet ist.

Um dies zu vermeiden, werden der Infrarot-Sender und -Empfänger unmittelbar voreinander angeordnet, wodurch jedoch eine Fernabfrage nicht mehr möglich ist bzw. nur mittels einer arbeitsintensiven Adresszuordnung. Eine solche arbeits- und kostenintensive Adresszuordnung ist gleichfalls bei einer Funkverbindung erforderlich.

In der DE 198 53 000 A1 ist ein Verfahren geoffenbart, mit dem eine Fernabfrage fahrzeugspezifischer Daten eines Kraftfahrzeuges möglich ist. Dabei wird von einer Zentrale ein elektronisch kodiertes Signal ausgesandt, um eine eindeutige Adressierung beim Datenaustausch zu gewährleisten. Der in Bereitschaft stehende Sende-Empfänger des Kraftfahrzeugs sendet daraufhin die Betriebsdaten an die Zentrale.

Der Erfindung liegt die Aufgabe zugrunde, ein Verfahren der gattungsgemäßen Art sowie ein einen Stellantrieb aufweisendes Aggregat so weiterzuentwickeln, dass mit geringem Aufwand eine zuverlässige selektive Abfrage der gespeicherten Daten möglich ist.

Diese Aufgabe wird durch ein Verfahren mit den Merkmalen des Anspruchs 1 bzw. durch ein Aggregat mit den Merkmalen des Anspruchs 10 gelöst.

Durch die Erfindung ist es nun möglich, auch in einer Reihe nebeneinander liegender Aggregate genau das Aggregat abzufragen, das abgefragt werden soll, ohne dass die Datenspeicher der übrigen benachbarten Aggregate aktiviert werden.

Naturgemäß ergeben sich daraus eine ganze Reihe von Vorteilen.

Beispielhaft ist zu nennen, dass auch über relativ große Entfernungen gefahrlos mit dem Stellantrieb bzw. mit dem entsprechenden Aggregat kommuniziert werden kann, um den aktuellen Betriebszustand sowie weitere Betriebsdaten abzurufen.

Auf die Vergabe von Adressen kann verzichtet werden, da, wie erwähnt, lediglich ein bestimmtes Aggregat zur Datenabgabe aktiviert wird.

Nach einem vorteilhaften Gedanken der Erfindung ist weiterhin vorgesehen, dass das Signal zur Aktivierung des Senders bzw. des Auslösers durch einen Laserstrahl erfolgt, der über einen vorzugsweise händisch zu bedienenden Sender ausgesandt und auf den betreffenden Empfänger bzw. Auslöser gerichtet wird. Dabei bietet der sichtbare Strahl des Lasers eine Sicherheit dafür, dass genau das Aggregat mit dem Signal beaufschlagt wird, dessen Daten abgefragt werden sollen.

Nach der Aktivierung des Senders erfolgt die Abgabe der gespeicherten Daten und deren Empfang und Auswertung beispielsweise durch einen tragbaren Rechner, der mit einem entsprechenden Empfänger bestückt ist.

Die Dauer der Aktivierung des Senders kann vorbestimmt sein, so dass nach einer bestimmten Zeitspanne der Sender automatisch abschaltet. Denkbar ist aber auch, den Sender durch die drahtlose Kommunikation über das Einschaltsignal zu deaktivieren, wozu lediglich eine entsprechende Schaltung des Auslösers vorgesehen sein muss.

Die drahtlose Kommunikation zwischen dem Sender und dem als Empfänger konfigurierten Rechner erfolgt bevorzugt einseitig, so dass ein unberechtigter Zugriff ohne Administratorenrechte auf die Steuerung des Stellantriebes nicht möglich ist, was eine gewisse Betriebssicherheit zur Folge hat.

Das gleiche System kann jedoch autorisiert, d.h. mit Administratorrechten, bidirektional betrieben werden, so dass die im Aggregat vorhandene Elektronik drahtlos konfiguriert und parametriert werden kann.

Dabei ist es ohne weiteres möglich direkt Funktionen des Aggregates zu starten, wie Notaus, Auf, Zu, Halt oder dergleichen. Überdies kann im Bedarfsfall das Signal moduliert werden.

Durch geeignete Mittel kann eine optische und/oder akustische Aktivitätserkennung der Elektronik bzw. der Signalquelle erfolgen. Dabei kann die Signalquelle, mit der der Auslöser des Aggregates aktivierbar ist, im Sende-/Empfangsgerät, beispielsweise dem genannten Rechner, integriert sein.

Daneben kann die Elektronik des Aggregates so konfiguriert sein, dass sie von außen sichtbar optisch anzeigt, wenn wichtige Meldungen abgerufen werden sollen, z.B. Stör- oder Wartungsmeldungen.

Weitere vorteilhafte Ausbildungen der Erfindung sind in den Unteransprüchen gekennzeichnet.

Das erfindungsgemäße Verfahren wird anhand der beigefügten schematischen Zeichnung beschrieben.

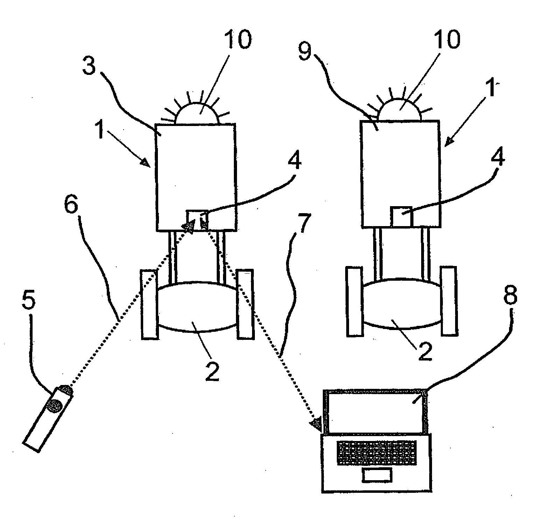

In der Figur sind zwei, jeweils einen Stellantrieb 3, 9 aufweisende Aggregate 1 dargestellt, die räumlich sehr eng nebeneinander platziert sind.

Dabei ist jeder Stellantrieb 3, 9 einem Ventil 2 zugeordnet, die beispielsweise in ein Rohrleitungssystem als Funktionsteile integriert sein können.

Jeder Stellantrieb weist einen nicht als Einzelheit dargestellten Datenspeicher auf, dessen Daten drahtlos - symbolisiert durch den punktiert dargestellten Strahl 7 - an ein Sende- und Empfangsgerät, beispielsweise einen tragbaren Rechner mit Infrarotschnittstelle, übermittelt werden. Die übertragenen Daten sind funktions- bzw. betriebsrelevante Daten des jeweiligen Aggregates.

Dabei werden diese Daten von einem im Stellantrieb angeordneten Sender an den Rechner übermittelt.

Zur Aktivierung des Senders ist diesem zugeordnet ein Auslöser, der mit einem im vorliegenden Ausführungsbeispiel Infrarotempfänger 4 bestückt ist, der drahtlos über eine Strahlenquelle 5 auslösbar ist. Dabei kann diese Strahlenquelle 5 als handelsüblicher Laser-Stift ausgebildet sein. Die Infrarotstrahlung ist durch das Bezugszeichen 6 dargestellt.

Wie durch den Doppelpfeil des Strahls 7 verdeutlicht, können im Bedarfsfall vom Rechner 8 Daten an den Stellantrieb übermittelt werden, durch den der Stellantrieb 3 beispielsweise einstellbar ist.

Beide dargestellten Aggregate 1, die, wie erwähnt, räumlich eng benachbart zueinander montiert sind, sind im wesentlichen gleich ausgebildet. D.h., auch der Infrarotempfänger 4 und zugeordnete Bauteile wie der Auslöser sind gleich.

Je nachdem, welcher Infrarotempfänger 4 mit dem Strahl 6 beaufschlagt wird, wird der zugeordnete Datenspeicher aktiviert, während der benachbarte Stellantrieb 1 hiervon unberührt bleibt.

Zur Signalgebung für den Fall, dass z.B. Betriebsstörungen vorliegen, kann der Stellantrieb mit einem akustischen oder, wie im gezeigten Beispiel, optischen Signalgeber 10 ausgestattet sein.

## Patentansprüche

1. Verfahren zur Ermittlung fulktions- und/oder betriebsrelevanter Daten eines mit einem Stellantrieb (3) ausgestatteten Aggregates (1), wobei die Daten von einem im Aggregat (1) integrierten Datenspeicher erfasst und drahtlos über einen Sender an einen räumlich davon getrennten Empfänger übermittelt werden, **dadurch gekennzeichnet, dass** die Aktivierung des Senders direkt oder indirekt über ein als zielgerichteter Strahl drahtlos übertragenes Signal erfolgt.

2. Verfahren nach Anspruch 1, **dadurch gekennzeichnet, dass** der Sender über einen durch das Signal ausgelösten Auslöser aktiviert wird.

3. Verfahren nach Anspruch 1 oder 2, **dadurch gekennzeichnet, dass** die Ausschaltung des Senders zeitabhängig erfolgt.

4. Verfahren nach einem der vorhergehenden Ansprüche, **dadurch gekennzeichnet, dass** die Ausschaltung des Senders über das drahtlos übertragene Signal erfolgt.

5. Verfahren nach einem der vorhergehenden Ansprüche, **dadurch gekennzeichnet, dass** der Empfang der vom Sender übermittelten Daten durch einen vorzugsweise transportablen Rechner (8) erfolgt.

6. Verfahren nach einem der vorhergehenden Ansprüche, **dadurch gekennzeichnet, dass** der Rechner (8) einen Sender aufweist, mit dem Signale an den Stellantrieb (3) übermittelt werden zur Regelung des Stellantriebs (3).

7. Verfahren nach einem der vorhergehenden Ansprüche, **dadurch gekennzeichnet, dass** das Signal zur Aktivierung des Senders von einer mobilen Strahlenquelle ausgesandt wird, vorzugsweise einer Laser-Leuchte.

8. Verfahren nach einem der vorhergehenden Ansprüche, **dadurch gekennzeichnet, dass** die Aktivierung des Senders im Stellantrieb (3) durch eine Lichtquelle sichtbar ist.

9. Verfahren nach einem der vorhergehenden Ansprüche, **dadurch gekennzeichnet, dass** die Aktivierung des Senders durch eine Lichtquelle am Stellantrieb (3) bzw. am Empfänger des Stellantriebs (3) sichtbar ist.

10. Einen Stellantrieb aufweisendes Aggregat (1), mit einem integrierten Datenspeicher, dessen Daten drahtlos mittels eines Senders an einen Empfänger übermittelbar sind, **dadurch gekennzeichnet, dass** das Aggregat (1) zur Aktivierung des Senders einen damit in Wirkverbindung stehenden drahtlos betätigbaren, mit einem Empfänger (4) ausgestatteten Auslöser aufweist.

11. Aggregat nach Anspruch 10, **dadurch gekennzeichnet, dass** der Empfänger (4) als Infrarotempfänger ausgebildet ist.

12. Aggregat nach Anspruch 10 oder 11, **dadurch gekennzeichnet, dass** die vom Infrarotempfänger (4) zu empfangenden Signale von einer mobilen Strahlenquelle (5) aussendbar sind.

13. Aggregat nach einem der vorhergehenden Ansprüche 10 bis 12, **dadurch gekennzeichnet, dass** die mobile Strahlenquelle (5) als Laser-Leuchte ausgebildet ist.

14. Aggregat nach einem der Ansprüche 10 bis 13, **dadurch gekennzeichnet, dass** die mobile Strahlenquelle (5) als Infrarot-Leuchte ausgebildet ist.

## Claims

1. Method for determining function-relevant and/or operation-relevant data for an assembly (1) provided with an actuator (3), the data being acquired from a data memory integrated in the assembly (1) and being wirelessly transmitted, via a transmitter, to a receiver spatially separate from the latter, **characterized in that** the transmitter is activated directly or indirectly using a signal wirelessly transmitted as a targeted beam.

2. Method according to Claim 1, **characterized in that** the transmitter is activated using a trigger triggered by the signal.

3. Method according to Claim 1 or 2, **characterized in that** the transmitter is switched off in a time-dependent manner.

4. Method according to one of the preceding claims, **characterized in that** the transmitter is switched off using the wirelessly transmitted signal.

5. Method according to one of the preceding claims, **characterized in that** the data transmitted by the transmitter are received by a preferably portable computer (8).

6. Method according to one of the preceding claims, **characterized in that** the computer (8) has a transmitter which is used to transmit signals to the actuator (3) in order to control the actuator (3) .

7. Method according to one of the preceding claims, **characterized in that** the signal for activating the transmitter is emitted by a mobile radiation source, preferably a laser light.

8. Method according to one of the preceding claims, **characterized in that** the activation of the transmitter is visible in the actuator (3) by means of a light source.

9. Method according to one of the preceding claims, **characterized in that** the activation of the transmitter is visible by means of a light source on the actuator (3) or on the receiver of the actuator (3).

10. Assembly (1) having an actuator, with an integrated data memory, the data from which can be wirelessly transmitted to a receiver using a transmitter, **characterized in that**, in order to activate the transmitter, the assembly (1) has a wirelessly actuatable trigger which is operatively connected to the transmitter and is provided with a receiver (4).

11. Assembly according to Claim 10, **characterized in that** the receiver (4) is in the form of an infrared receiver.

12. Assembly according to Claim 10 or 11, **characterized in that** the signals to be received by the infrared receiver (4) can be emitted by a mobile radiation source (5).

13. Assembly according to one of the preceding Claims 10 to 12, **characterized in that** the mobile radiation source (5) is in the form of a laser light.

14. Assembly according to one of Claims 10 to 13, **characterized in that** the mobile radiation source (5) is in the form of an infrared light.

## Revendications

1. Procédé permettant de détecter des données pertinentes pour le fonctionnement et/ou la gestion d'une unité (1) équipée d'un servomoteur (3), les données étant détectées par un accumulateur de données intégré dans l'unité (1) et transférées par une liaison sans fil par un émetteur à un récepteur séparé de celui-ci dans l'espace,
**caractérisé en ce que**
l'activation de l'émetteur est effectuée directement ou indirectement par un signal transmis par une liaison sans fil sous la forme d'un faisceau dirigé vers la cible.

2. Procédé conforme à la revendication 1,
**caractérisé en ce que**
l'émetteur est activé par un déclencheur déclenché par le signal.

3. Procédé conforme à la revendication 1 ou 2,
**caractérisé en ce que**
la coupure de l'émetteur est effectuée en fonction du temps.

4. Procédé conforme à l'une des revendications précédentes, **caractérisé en ce que**
la coupure de l'émetteur est effectuée par l'intermédiaire du signal transmis par une liaison sans fil.

5. Procédé conforme à l'une des revendications précédentes, **caractérisé en ce que**
la réception des données transmises par l'émetteur est effectuée par un calculateur (8) de préférence portatif.

6. Procédé conforme à l'une des revendications précédentes, **caractérisé en ce que**
le calculateur (8) comporte un émetteur permettant de transférer des signaux au servomoteur (3) pour permettre une régulation de ce servomoteur (3).

7. Procédé conforme à l'une des revendications précédentes, **caractérisé en ce que**
le signal d'activation de l'émetteur est émis par une source de rayonnement mobile de préférence une lampe laser.

8. Procédé conforme à l'une des revendications précédentes, **caractérisé en ce que**
l'activation de l'émetteur est visible dans le servomoteur (3) par l'intermédiaire de sources de lumière.

9. Procédé conforme à l'une des revendications précédentes, **caractérisé en ce que**
l'activation de l'émetteur est visible par une source lumineuse sur le servomoteur (3) ou le récepteur du servomoteur (3).

10. Unité (1) équipée d'un servomoteur comprenant un accumulateur de données intégré dont les données peuvent être transmises par une liaison sans fil d'un émetteur à un récepteur,
**caractérisée en ce que**
pour permettre l'activation de l'émetteur, l'unité (1) comporte un déclencheur équipé d'un récepteur (4) en liaison fonctionnelle avec celui-ci et pouvant être actionné par une liaison sans fil.

11. Unité conforme à la revendication 10,
**caractérisée en ce que**
le récepteur (4) est réalisé sous la forme d'un récepteur infrarouge.

12. Unité conforme à la revendication 10 ou 11,
**caractérisée en ce que**
les signaux devant être reçus par le récepteur infrarouge (4) peuvent être émis par une source de rayonnement mobile (5).

13. Unité conforme à l'une des revendications précédentes 10 à 12, **caractérisée en ce que**
la source de rayonnement mobile (5) est réalisée sous la forme d'une lampe laser.

14. Unité conforme à l'une des revendications précédentes 10 à 13, **caractérisée en ce que**
la source de rayonnement mobile (5) est réalisée sous la forme d'une lampe infrarouge.
